# EUROPEAN PATENT APPLICATION

(11) **EP 4 052 624 A1**
(43) Date of publication of application: **07.09.2022**
(21) Application number: 21160640.5
(22) Date of filing: 04.03.2021
(51) Int. Cl.: A47J 43/046, A47J 43/07

(54) **APPLIANCE AND METHOD FOR LID DETECTION OF AN APPLIANCE**

(71) Applicant: BSH Hausgeräte GmbH, 81739 München (DE)
(72) Inventor: Koscak, Ales, 6230 Postojna (SI); Miklavcic, Jure, 1230 Domzale (DE)

(57) **Abstract**

A household appliance (100) is described, which comprises a receptacle (102) for a food item that is to be processed by the appliance (100), and a lid (108) configured to close the receptacle (102) in a leak-tight manner, when placed on the receptacle (102). Furthermore, the appliance (100) comprises an air pump (105) which is configured to pump air out of the interior of the receptacle (102) via an air duct (109, 209). A control unit (111) of the appliance (100) is configured to operate the air pump (105), and to determine whether the lid (108) is placed and/or is correctly placed on the receptacle (102) based on an air pressure within the air duct (109, 209) that is caused by operation of the air pump (105).

## Description

The present document relates to a household appliance, notably a kitchen appliance that allows processing of food items in a vacuum environment. Furthermore, the present document relates to a method for lid detection of such a household appliance.

A kitchen appliance, such as a blender, comprises a receptacle, notably a jar, within which a food item can be processed. The receptacle can be covered by a lid. The kitchen appliance may have a vacuum function which allows a (partial) vacuum to be established within the receptacle, such that a food item can be processed in a vacuum environment. For creating the vacuum environment, the kitchen appliance comprises an air pump that is configured to pump air out of the receptacle.

In order to allow safe operation of a kitchen appliance, the receptacle of the appliance should be covered by a lid. The present document addresses the technical problem of performing lid detection of a household, notably a kitchen, appliance in a reliable and efficient manner. The technical problem is solved by each of the independent claims. Preferred examples are described in the dependent claims.

According to an aspect, a household appliance, notably a kitchen appliance, is described. The appliance may be configured to perform processing, notably food processing, using a partial vacuum. In a particular example, the appliance is a food blender, notably a vacuum food blender.

The appliance comprises a receptacle (notably a jar) for a food item which is to be processed by the appliance. Furthermore, the appliance may comprise a base unit, onto which the receptacle is placed. The base unit may comprise an electrical motor for operating a tool, e.g., a knife, within the interior of the receptacle.

Furthermore, the appliance comprises a lid which is configured to close the receptacle, preferably in a leak-tight or air-tight manner, when the lid is placed on the receptacle. The lid may be placed on the upper edge of the receptacle for creating a closed room within which a food item may be processed. The receptacle, notably the upper edge of the receptacle, may have a (circular) circumference, and the lid may have an outer edge with a corresponding circumference.

The appliance further comprises an air pump which is configured to pump air out of the interior of the receptacle via an air duct (i.e., via an air channel or a line that is configured to guide air). The air duct may also be referred to as an air pipe. The air duct may be implemented as a (stiff) tube or pipe or as a (flexible) hose. The air pump may be located within the base unit. The air duct may extend from the air pump to the interior of the receptacle (if, notably only if, the lid is placed and/or is correctly placed on the receptacle). The air pump may be operated to generate a partial vacuum within the interior of the receptacle. For this purpose, air may be pumped out of the receptacle, with the receptacle being closed by the lid (in a leak-tight, preferably in an air-tight, manner). The partial vacuum may exhibit an air pressure of less than 1000 mbar, or of less than 100 mbar, or of less than 10 mbar, or of less than 1 mbar, or of less than 0,1 mbar. Processing food items within a partial vacuum may improve the quality of the processed food items.

The appliance comprises a control unit which is configured to operate the air pump. By way of example, operation of the air pump may be initiated automatically, when a user activates the appliance. Operation of the air pump may be initiated prior to starting processing, preferably prior to starting operation of the electrical motor, of the appliance. In particular, operation of the air pump may be initiated (solely) for verifying whether the lid is placed, in particular whether the lid is correctly placed, on the receptable (in order to ensure a safe and reliable operation of the appliance).

The control unit is further configured to determine whether the lid is placed, in particular whether the lid is correctly placed, on the receptacle, based on the air pressure within the air duct, wherein the air pressure is caused by operation of the air pump. In particular, the control unit may be configured to determine one or more sensor measurement values which are indicative of the air pressure within the air duct (preferably one or more sensor measurement values which are measured using a pressure sensor of the appliance). It may then be determined based on the one or more measurement values whether the lid is placed, in particular whether the lid is correctly placed, on the receptacle.

The lid may be considered to be placed, in particular correctly placed, on the receptacle, if the lid and the receptacle form a room in the interior of the receptacle that is leak-tight, preferably air-tight (according to a pre-determined degree of tightness).

Hence, an appliance is described which provides efficient and reliable means for performing lid detection (in particular without the need for an additional mechanical lock mechanism).

The control unit may be configured to determine the time duration (starting from the beginning of the operation of the air pump) until the (time instant at which the) air pressure within the air duct reaches a pre-determined pressure threshold. The pre-determined pressure threshold may correspond to the partial vacuum that is to be established within the interior of the receptable.

It may then be determined whether the lid is placed, in particular correctly placed, on the receptacle based on the time duration. In particular, the control unit may be configured to compare the time duration with a pre-determined duration threshold (wherein the duration threshold may correspond to the time duration that is needed for reaching the pre-determined pressure threshold, for the case when the lid is correctly placed on the receptacle (possibly plus a certain additional safety margin)). It may then be determined that the lid is placed, in particular is correctly placed, on the receptacle, if the time duration is smaller than or equal to the duration threshold. On the other hand, it may be determined that the lid is not placed and/or is not correctly placed on the receptacle, if the time duration is greater than the duration threshold. By taking into account the time duration for reaching a pre-determined pressure threshold, lid detection may be performed in particularly reliable manner.

The control unit may be configured to block operation of the appliance, preferably block processing of a food item placed within the receptable, and/or block operation of the electrical motor of the appliance, if it is determined that the lid is not placed, in particular is not correctly placed, on the receptacle. Alternatively, or in addition, the control unit may be configured to provide an indication to the user of the appliance via a user interface of the appliance, if it is determined that the lid is not placed, in particular is not correctly placed, on the receptacle. As a result of this, a safe operation of the appliance can be ensured in an efficient manner.

The receptacle typically comprises a side wall extending from a lower, in particular a bottom, part of the receptacle (which is in contact with the base unit of the appliance) to an upper, in particular a top, part of the receptable (which it typically covered by the lid). A first duct section of the air duct may extend from the lower part to the upper part of the receptacle. In particular, the first duct section may be attached to and/or may be integrated into the side wall and/or a handle of the receptacle. By doing this, the air duct for generating the partial vacuum within the receptable may be provided in a space efficient manner (notably without using an extra arm that extends parallel to the side wall of the receptacle).

The lid may comprise a second duct section of the air duct. The second duct section may extend from the outer edge of the lid (which is facing the side wall of the receptacle) towards a portion of the lid, which faces the interior of the receptacle, when the lid is placed, in particular is correctly placed, on the receptable (e.g., towards a knob of the lid).

Hence, the air duct may be segmented into different duct sections. In particular, the air duct may be such that the complete air duct from the air pump to the interior of the receptacle is only available when the lid is placed, in particular is correctly placed, on the receptacle. By doing this, the reliability of lid detection is further improved.

The lid may comprise a seal at the outer edge of the lid, wherein the seal may be configured to seal the gap between the outer edge of the lid and the upper edge of the side wall of the receptacle along the entire circumference of the side wall of the receptacle. As a result of this, a leak-tight, preferably an air-tight, connection between the lid and the receptacle may be provided in an efficient and reliable manner.

The seal may be configured to form an air conduct which is delimited (or confined) at an outer side (directly) by the side wall of the receptacle and at an inner side (directly) by the seal, when the lid is placed, in particular is correctly placed, on the receptable. The air conduct may extend along the entire circumference of the side wall of the receptacle. The air conduct may be used to couple the first duct section with the second duct section to form the air duct. By providing a seal which forms an air conduct around the entire circumference of the receptacle, the user is enabled to place the lid in an arbitrary manner (i.e. rotated in an arbitrary manner) on the receptacle, thereby increasing the comfort of use of the appliance.

The seal may comprise an opening between the air conduct and the second duct section. Furthermore, the first duct section may be configured to open out into the outer side of the air conduct, when the lid is placed, in particular is correctly placed, on the receptable. By doing this, the two duct sections may be coupled in a reliable manner via the air conduct that is formed by the seal.

The lid may comprise a mechanism (preferably a knob) which is configured (in a first position, in particular in a vacuum position) to open the second duct section such that the air pump is enabled to pump air from the interior of the receptacle, and which is configured (in a second position, in particular in a safety position) to close the second duct section such that the air pump is disabled from pumping air from the interior of the receptacle and/or such that the air pump is limited to pumping air from the air duct. By providing a mechanism which allows to switch between vacuum operation of the appliance (when the air duct is open) and lid detection (when the air duct is closed), the comfort of use and/or safety of the appliance can be further improved.

As already indicated above, the air duct may extend from the air pump to the lid, when the lid is placed, in particular is correctly placed, on the receptable. The lid may comprise a mechanism for opening the air duct (in particular the second duct section) such that an air channel between the air pump and the interior of the receptacle is created, and alternatively for closing the air duct (in particular the second duct section) such that the air channel between the air pump and the interior of the receptacle is blocked. The control unit may be configured to operate the air pump for determining whether the lid is placed, in particular is correctly placed, on the receptacle, while the air duct is closed. By performing lid detection with the air duct being closed, the time duration which is required for performing lid detection can be reduced, thereby increasing the comfort of use of the appliance.

The mechanism for opening and closing the air duct may be designed such that upon activation of the appliance and/or such that per default the air duct is closed. This may be achieved e.g., using a spring which automatically switches the mechanism to the closed setting. By doing this, the speed and the reliability of lid detection may be increased.

The mechanism for opening and closing the air duct may comprise a knob which is configured to be turned (preferably to be turned manually by a user of the appliance) between the vacuum position for opening the air duct to enable a partial vacuum to be generated in the interior of the receptacle, and the safety position for closing the air duct to enable verification of whether the lid is placed and/or is correctly placed on the receptacle. A knob allows a user to enable lid detection or vacuum generation in a particularly comfortable manner.

According to a further aspect, a method for determining whether a lid is placed and/or is correctly placed on a receptacle of a household appliance is described. The appliance comprises an air pump which is configured to pump air out of the interior of the receptacle via an air duct (preferably for allowing processing within the receptable using a partial vacuum). The method comprises operating the air pump (prior to starting processing within the receptable and/or prior to starting operation of the appliance for processing). The method further comprises determining whether the lid is placed and/or is correctly placed on the receptacle based on the air pressure (or based on an indication of the air pressure) within the air duct.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
- Figure 1: shows an exemplary kitchen appliance with an arm that comprises a locking mechanism for the lid of the receptacle of the kitchen appliance;
- Figure 2a: shows an exemplary receptacle with a lid comprising a knob in a safety position;
- Figure 2b: shows the upper part of the receptacle shown in Figure 2a;
- Figure 2c: shows an exemplary knob;
- Figure 2d: shows the receptacle of Figure 2a with the knob being in a vacuum position;
- Figure 2e: shows top views of the knob in two different positions; and
- Figure 3: shows a flow chart of an example method for detecting the status of the lid of the receptacle of a kitchen appliance.

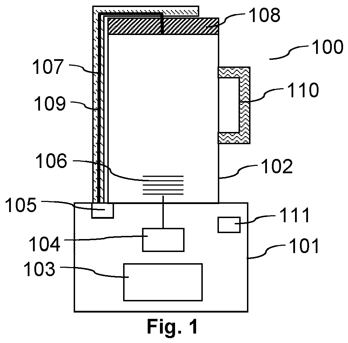

As outlined above, the present document is directed at determining the status of the lid of the receptacle of a kitchen appliance in an efficient and reliable manner. In this context, Fig. 1 shows an example kitchen appliance 100 with a receptacle 102 that is placed onto a base unit 101 of the appliance 100. The base unit 101 may comprise a user interface 103 which allows a user to interact with the appliance 100. Furthermore, the base unit 101 may comprise a motor 104 for operating a tool 106, e.g., a knife, within the receptacle 102. In addition, a control unit 111 of the appliance 100 may be located within the base unit 101.

The receptacle 102 may comprise a handle 110 which is configured to allow a user to take off the receptacle 102 from the base unit 101 and to hold the receptacle 102 using one hand. The receptacle 102 may be closed, preferably in a leak-tight or air-tight manner, using a lid 108.

The appliance 100 may comprise an air pump 105, e.g., within the base unit 101, which is configured to pump air out of the receptacle 102 in order to establish a vacuum, notably a partial vacuum, within the receptacle 102. The air may be pumped out of the receptacle 102 through an air duct 109.

The appliance 100 in Fig. 1 comprises an arm 107 which stretches from the base unit 101 along a side wall of the receptacle 102 to the lid 108 on the upper part of the receptacle 102. The air duct 109 may be integrated within the arm 107 and may go through the lid 108. By doing this, it may be ensured that the receptacle 102 is covered by the lid 108, when pumping air to establish the partial vacuum. Furthermore, a mechanical locking mechanism (not shown) may be integrated into the arm 107, which ensures the lid 108 to be placed correctly onto the receptacle 102.

The use of an additional arm 107 increases the size and the cost of the kitchen appliance 100. In the following an appliance 100 is described, which is configured to detect whether the receptacle 102 is correctly covered by the lid 108 without the need of an arm 107 that extends along the side wall of the receptacle 102.

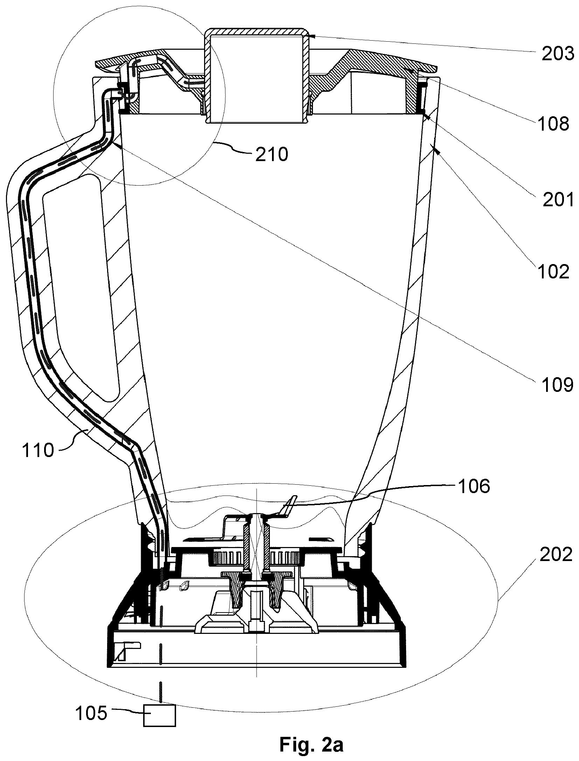

Fig. 2a shows an example receptacle 102 for a kitchen appliance 100. The air duct 109 is integrated into the handle 110 and/or the side wall of the receptacle 102, thereby dispensing with the need for an additional arm 107. The pipe 109 extends from a lower and/or bottom part 202 of the receptacle 102 (where the pipe 109 is coupled to the air pump 105) to an upper part 210 of the receptacle 102 (where the pipe 109 is coupled to the lid 108 which is placed on the receptacle 102).

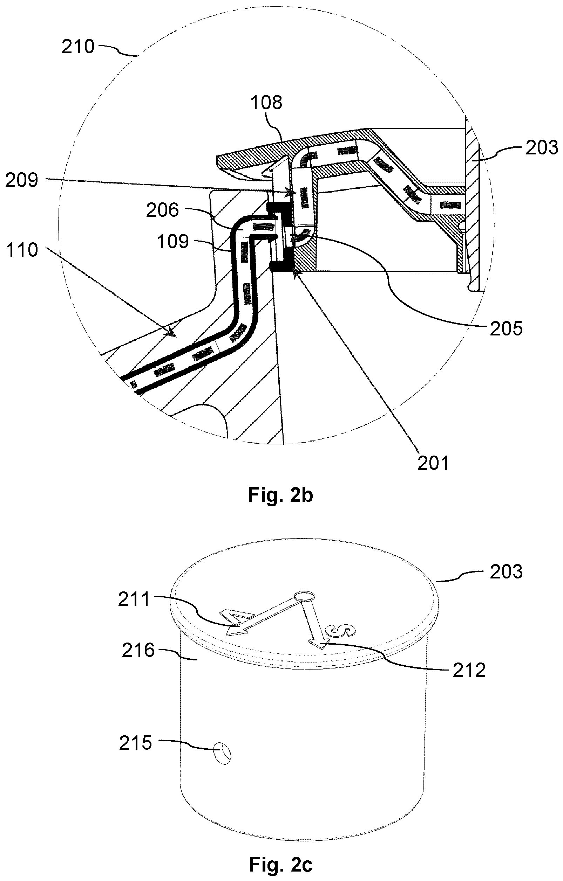

A seal 201 is placed between the side wall of the receptacle and the lid 108. In particular, the seal 201 may be attached to the lid 108, such that the seal 201 is removed from the receptacle 102 along with the lid 108. As shown in Fig. 2b, the seal 201 comprises an opening 205 for coupling the first duct section 109 within the receptacle 102 with a second duct section 209 within the lid 108. Hence, by providing a seal 201 with an opening 205, an overall pipe 109, 209 from the lower part 202 of the receptacle 102 to the lid 108 may be provided.

The lid 108 comprises a knob 203 which is integrated into the lid 108 in a pivotable manner, such that the knob 203 can be turned into different positions 211, 212 (see Fig. 2c). The knob 203 comprises a cylindrical wall 216 with an opening or a hole 215. The knob 203 may be turned into a vacuum position 211 such that the hole 215 within the wall 216 is facing the second duct section 209. As a result of this, the air duct 109, 209 is coupled with the interior of the receptacle 102 such that air can be pumped through the pipe 109, 209 out of the receptacle 102 to create a partial vacuum.

Furthermore, the knob 203 may be turned into a safety position 212 within which the wall 216 blocks the second duct section 209, such that the air duct 109, 209 is decoupled from the interior of the receptacle 102. As a result of this, no air can be sucked out of the interior of the receptacle 102.

The knob 203 is an example for a general (mechanical) mechanism that is configured to open and to close the second duct section 209. The mechanism may be integrated into the lid 108 in a pivotable manner, such that the mechanism may be turned to open or to close the second duct section 209.

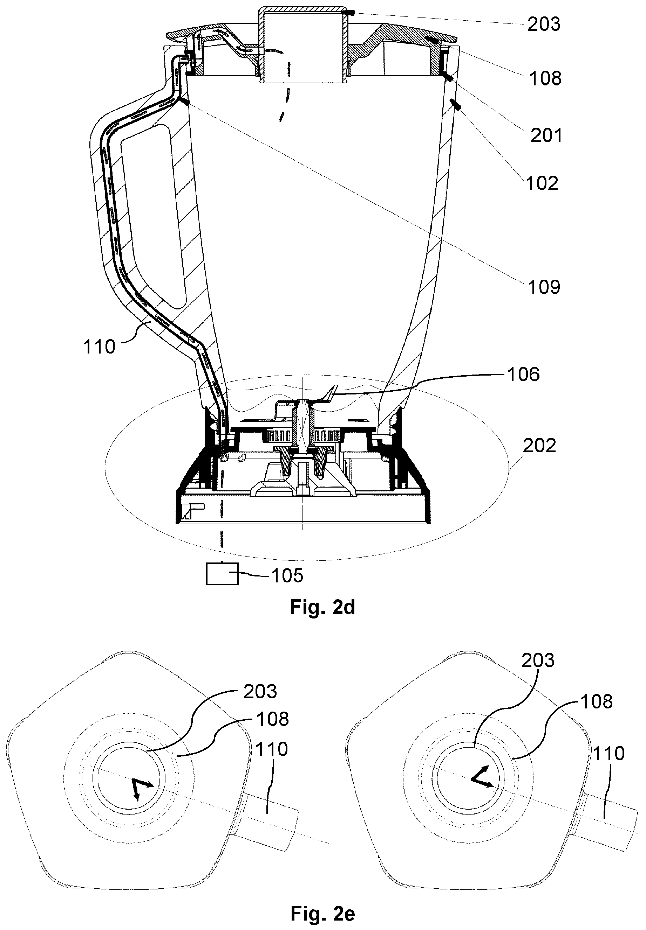

Fig. 2a shows the receptacle 102 with the knob 203 being turned to the safety position 212. Fig. 2d shows the receptacle 102 with the knob 203 being turned to the vacuum position 211. Fig. 2e shows top views of the lid 108 with the knob 203 being in the safety position 212 (left side) and with the knob 203 being in the vacuum position 211 (right side).

The control unit 111 of the appliance 100 may be configured to determine the status of the lid 108 based on the time duration that it takes to reduce the pressure within the pipe 109, 209 to a pre-determined pressure value (corresponding to the partial vacuum). If the lid 108 is placed correctly onto the receptacle 102 (such that an air-tight pipe 109, 209 is established starting from the pump 105), the pre-determined pressure value will be reached within a given time duration. On the other hand, if the lid 108 is not placed correctly onto the receptacle 102 (such that there is a leak between the first duct section 109 and the second duct section 209), the pre-determined pressure value will typically not be reached (at least not within the given time duration). Hence, by determining the time duration for establishing the partial vacuum, the status of the lid 108 can be determined in an efficient and reliable manner.

If the lid 108 is placed correctly on the receptacle 102 and if the knob 203 is turned to the safety position 212, the time duration for reaching the pre-determined pressure value within the pipe 109, 209 is relatively short, because the pipe 109, 209 is blocked by the wall 216 of the knob 203. Hence, by comparing the determined time duration with a first (relatively small) duration threshold, it may be determined whether the knob 203 is turned towards the safety position 212 or not. Alternatively, or in addition, it may be determined in a relatively fast manner, whether the lid 108 is placed correctly on the receptacle 102 (when the knob 203 is turned to the safety position 212).

Furthermore, if the lid 108 is placed correctly on the receptacle 102 and if the knob 203 is turned to the vacuum position 211, the time duration for reaching the pre-determined pressure value within the pipe 109, 209 corresponds to the time duration for reaching the pre-determined pressure value (i.e., the partial vacuum) within the receptacle 102. Hence, by comparing the determined time duration with a second duration threshold (which is higher than the first duration threshold), it can be determined whether the knob 203 is turned towards the vacuum position 211 or not.

Hence, a lock safety mechanism is described, which is non-mechanical and which allows dispensing with the arm 109 next to the jar 102 of a vacuum blender 100. The lock safety mechanism makes use of the vacuum for detecting the status of the lid 108 on the jar 102.

As outlined in the context of Fig. 1, vacuum blenders or other appliances 100 with a vacuum function may comprise a mechanical lock system for detecting whether the lid 108 is correctly placed onto the jar 102, thereby ensuring safety of the appliance 100. The mechanical lock system may comprise an arm 107 next to the jar 102, which extends from the base unit 101 of an appliance 100 to the upper part of the appliance 100, notably to the top of the jar 102. A pipe 109 may be located inside the arm 107, wherein the pipe 109 connects the vacuum pump 105 with the jar 102.

By dispensing with the arm 107, the size of the appliance 100 can be reduced, thereby making the appliance 100 easier to store, while at the same time providing the functions and/or operation modes of an appliance 100 with vacuum function.

The appliance 100 comprises a jar 102, a lid 108, a knob 203 with two positions 211, 212, a pipe 109 inside of the jar 102 and a seal 201. In the bottom part of jar 102 the pipe 109 is connected with and/or coupled to the vacuum pump 105. The seal 201 goes around the entire perimeter and/or circumference of the lid 108. The knob 203 may be turned to a vacuum position 211 which allows a partial vacuum to be generated inside of the jar 102 (e.g., for blending). The vacuum position 211 of the knob 203 allows the pipe 109, 209 to be coupled via a hole or free passage 215 of the knob 203 with the interior of the jar 102.

In the safety position 212 of the knob 203, the pipe 109, 209 is blocked from the jar 102. As a result of this, the pump 105 cannot pump air from the interior of the jar 102. The safety position 212 may be used to detect whether the lid 102 is correctly placed on the jar 102.

The knob 203 may be configured to be manually switched, notably turned, between the vacuum position 211 and the safety position 212, wherein the default position may be the safety position 212. If the user of the appliance 100 wants to generate a vacuum, the knob 203 may be switched to the vacuum position 211. At the end of processing, the vacuum pump 105 may release the vacuum from the interior of the jar 102. For this purpose, the pump 105 may couple the pipe 109, 209 to the ambient atmosphere (within the surroundings of the jar 102).

The knob 203 may be configured, e.g., using a mechanism comprising e.g., a spring or one or more other elements, to automatically jump back to the safety position 212 subsequent to processing. By doing this, the comfort of use of the appliance 100 can be improved, because the user only needs to switch the knob 203 manually for activating the vacuum function.

Hence, the air channel between the vacuum pump 105 and the interior of the jar 102 can be opened or closed using the knob 203 which is integrated within the lid 108. If the knob 203 is in the safety position 212 (e.g., when starting operation of the appliance 100), the vacuum pump 105 may start pumping air out of the pipe 109, 209. Due to the fact that the air passage 215 towards the interior of the jar 102 is blocked, only a relatively small amount of air needs to be pumped until reaching a pre-determined air pressure within the pipe 109, 209 (wherein the pre-determined air pressure may correspond to the target state of partial vacuum). Hence, the relatively short duration for reaching the pre-determined air pressure indicates to the control unit 111 of the appliance 100 that the lid 108 is correctly positioned on the jar 102 of the appliance 100. Subject to detecting the lid 108 on the jar 102, processing of the appliance 100 may be started. On the other hand, if it cannot be determined that the lid 108 is placed correctly on the jar 102, processing of the appliance 100 may be blocked. In particular, the pump 105 for generating a partial vacuum within the jar 102 may be stopped.

The time duration for establishing a partial vacuum within the pipe 109, 209 may be used to determine how well the lid 108 is placed on the jar 102. In particular, the degree of air-tightness of the gap between the lid 108 and the jar 102 may be measured. The control unit 111 may be configured to compare the time duration for establishing a partial vacuum within the pipe 109, 209 with a duration threshold, wherein the duration threshold depends on a target degree of air-tightness of the gap between the lid 108 and the jar 102. Furthermore, the control unit 111 may be configured to enable operation of the appliance 100, if the time duration is smaller than or equal to the duration threshold. On the other hand, the control unit 111 may be configured to block operation of the appliance 100, if the time duration is greater than the duration threshold. By doing this, a reliable, robust and safe operation of the appliance 100 may be ensured.

When the knob 203 is turned to the vacuum position 211, a connection between the interior of the jar 102 and the vacuum pump 105 is established. If it is detected that the lid 108 is correctly placed on the jar 102, the vacuum pump 105 will be operated to establish a partial vacuum within the jar 102. Otherwise, operation of the vacuum pump 105 may be blocked.

The seal 201 preferably extends around the entire circumference of the lid 108. The seal 201 may form an air conduct 206 around the entire circumference of the lid 108. The air conduct 206 may be configured to link the air duct section 109 of the jar 102 with the opening 205 of the seal 201, for all possible rotations of the lid 108 relative to the jar 102. As a result of this, the user is enabled to place the lid 108 randomly on the jar 102.

As already indicated above, the second duct section 109 within the lid 108 may be opened or closed by the side wall 216 of the knob 203. In particular, the knob 203 may be turned to the safety position 212 such that the side wall 216 closes the opening 205 of the seal 201. On the other hand, the knob 203 may be turned to the vacuum position 211 such that the opening 215 within the side wall 216 of the knob 203 is aligned with the opening 205 of the seal 201.

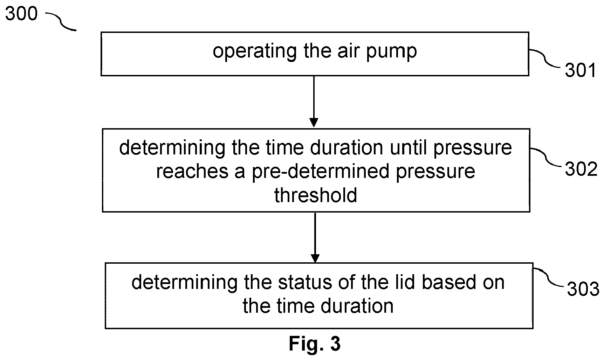

Fig. 3 shows a flow chart of an example method 300 for determining whether the lid 108 is placed and/or is correctly placed on the receptacle 102 of a household appliance 100, notably of a kitchen appliance. Operation of the household appliance 100 may e.g. only be enabled if it is determined that the lid 108 is placed and/or is correctly placed on the receptacle 102 (e.g. for closing the receptacle 102 in an air-tight manner).

The appliance 100 comprises an air pump 105 which is configured to pump air out of the interior of the receptacle 102 via an air duct 109, 209 and/or out of the air duct 109, 209 which leads to the interior of the receptacle 102. In particular, the appliance 100 may be configured to allow processing of food items within the receptacle 102 using a partial vacuum.

The method 300 comprises operating 301 the air pump 105. Furthermore, the method 300 comprises determining 302 whether the lid 108 is placed and/or is correctly placed on the receptacle 102 based on the air pressure within the air duct 109, 209, which is caused by operation of the air pump 105. The air pressure within the air duct 109, 209 may be measured using a pressure sensor of the appliance 100, notably of the air pump 105.

The measures which are described in the present document enable an appliance 100 to detect in an efficient and reliable manner, whether the receptacle 102 of the appliance 100 has been correctly covered by a lid 108. By doing this, mechanical lock mechanisms such as an arm 109 may be dispensed with, thereby reducing the cost and the size of the appliance 100. Furthermore, the measures allow the lid 108 to be placed arbitrarily onto the receptacle 102 of the appliance 100, thereby increasing the comfort of use of the appliance 100.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A household appliance (100) comprising,
- a receptacle (102) for a food item which is to be processed by the appliance (100);
- a lid (108) configured to close the receptacle (102) in a leak-tight manner, when placed on the receptacle (102);
- an air pump (105) which is configured to pump air out of the interior of the receptacle (102) via an air duct (109, 209); and
- a control unit (111) configured to
- operate the air pump (105); and
- determine whether the lid (108) is placed and/or is correctly placed on the receptacle (102) based on an air pressure within the air duct (109, 209) that is caused by operation of the air pump (105).

2. The appliance (100) of claim 1, wherein the control unit (111) is configured to
- determine a time duration until the air pressure within the air duct (109, 209) reaches a pre-determined pressure threshold; and
- determine whether the lid (108) is placed and/or is correctly placed on the receptacle (102) based on the time duration.

3. The appliance (100) of claim 2, wherein the pre-determined pressure threshold corresponds to a partial vacuum that is to be established within the interior of the receptable (102).

4. The appliance (100) of any of claims 2 to 3, wherein the control unit (111) is configured to,
- compare the time duration with a pre-determined duration threshold; and
- determine that the lid (108) is placed and/or is correctly placed on the receptacle (102), if the time duration is smaller than the duration threshold; and/or
- determine that the lid (108) is not placed and/or is not correctly placed on the receptacle (102), if the time duration is greater than the duration threshold.

5. The appliance (100) of any previous claim, wherein the control unit (111) is configured to,
- block operation of the appliance (100), notably block processing of a food item placed within the receptable (102), if it is determined that the lid (108) is not placed and/or is not correctly placed on the receptacle (102); and/or
- provide an indication to a user of the appliance (100) via a user interface (103) of the appliance (100), if it is determined that the lid (108) is not placed and/or is not correctly placed on the receptacle (102).

6. The appliance (100) of any previous claim, wherein
- the appliance (100) comprises a base unit (101), onto which the receptacle (102) is placed;
- the air pump (105) is located within the base unit (101); and
- the air duct (109, 209) is such that the air duct (109, 209) extends from the air pump (105) to the interior of the receptacle (102), if, notably only if, the lid (108) is placed and/or is correctly placed on the receptacle (102).

7. The appliance (100) of any previous claim, wherein
- the receptacle (102) comprises a side wall extending from a lower part (202) of the receptacle (102) to an upper part (210) of the receptable (102);
- a first duct section (109) of the air duct (109, 209) extends from the lower part (202) to the upper part (210) of the receptacle (102); and
- the first duct section (109) is notably attached to and/or integrated into the side wall and/or a handle (110) of the receptacle (102).

8. The appliance (100) of claim 7, wherein
- the lid (108) comprises a second duct section (209) of the air duct (109, 209);
- the lid (108) exhibits an outer edge facing the side wall of the receptacle (102) in the upper part of the receptable (102), when the lid (108) is placed and/or is correctly placed on the receptable (102); and
- the second duct section (209) extends from the outer edge of the lid (108) towards a portion of the lid (108), which faces the interior of the receptacle (102), when the lid (108) is placed and/or is correctly placed on the receptable (102).

9. The appliance (100) of claim 8, wherein
- the lid (108) comprises a seal (201) at the outer edge of the lid (108);
- the seal (201) is configured to seal a gap between the outer edge of the lid (108) and an upper edge of the side wall of the receptacle (102) along the entire circumference of the side wall of the receptacle (102);
- the seal (201) is configured to form an air conduct (206) which is delimited at an outer side by the side wall of the receptacle (102) and at an inner side by the seal (201), when the lid (108) is placed and/or is correctly placed on the receptable (102);
- the air conduct (206) extends along the entire circumference of the side wall of the receptacle (102);
- the seal (201) comprises an opening (205) between the air conduct (206) and the second duct section (209); and
- the first duct section (109) is configured to open out into the outer side of the air conduct (206), when the lid (108) is placed and/or is correctly placed on the receptable (102).

10. The appliance (100) of any of claims 8 to 9, wherein the lid (108) comprises a mechanism
- for opening the second duct section (209) such that the air pump (105) is enabled to pump air from the interior of the receptacle (102); and
- for closing the second duct section (209) such that the air pump (105) is disabled from pumping air from the interior of the receptacle (102) and/or is limited to pumping air from the air duct (109, 209).

11. The appliance (100) of any previous claim, wherein
- the air duct (109, 209) extends from the air pump (105) to the lid (108), when the lid (108) is placed and/or is correctly placed on the receptable (102); and
- the lid (108) comprises a mechanism
- for opening the air duct (109, 209) such that an air channel between the air pump (105) and the interior of the receptacle (102) is created; and
- for closing the air duct (109, 209) such that the air channel between the air pump (105) and the interior of the receptacle (102) is blocked.

12. The appliance (100) of claim 11, wherein the control unit (111) is configured to operate the air pump (105) for determining whether the lid (108) is placed and/or is correctly placed on the receptacle (102), while the air duct (109, 209) is closed.

13. The appliance (100) of any of claims 11 to 12, wherein the mechanism for opening and closing the air duct (109, 209) is designed such that upon activation of the appliance (100) and/or such that per default the air duct (109, 209) is closed.

14. The appliance (100) of any of claims 11 to 13, wherein the mechanism for opening and closing the air duct (109, 209) comprises a knob (203) which is configured to be turned manually by a user of the appliance (100) between
- a vacuum position (211) for opening the air duct (109, 209) to enable a partial vacuum to be generated in the interior of the receptacle (102); and
- a safety position (212) for closing the air duct (109, 209) to enable verification of whether the lid (108) is placed and/or is correctly placed on the receptacle (102).

15. A method (300) for determining whether a lid (108) is placed and/or is correctly placed on a receptacle (102) of a household appliance (100); wherein the appliance (100) comprises an air pump (105) which is configured to pump air out of the interior of the receptacle (102) via an air duct (109, 209); wherein the method (300) comprises
- operating (301) the air pump (105); and
- determining (302) whether the lid (108) is placed and/or is correctly placed on the receptacle (102) based on an air pressure within the air duct (109, 209), which is caused by operation of the air pump (105).
